# EUROPEAN PATENT APPLICATION

(11) **EP 4 170 966 A1**
(43) Date of publication of application: **26.04.2023**
(21) Application number: 22198469.3
(22) Date of filing: 28.09.2022
(51) Int. Cl.: H04L 9/40, H04L 67/1029, G06F 21/55, F03D 1/00, F03D 17/00

(54) **SYSTEMS AND METHODS FOR CONTROLLING AN INDUSTRIAL ASSET IN THE PRESENCE OF A CYBER ATTACK**

(30) Priority: 25.10.2021 US 202117509159
(71) Applicant: General Electric Company, Schenectady, NY 12345 (US)
(72) Inventor: Singal, Kalpesh, Niskayuna, NY, 12309 (US); D'Amato, Fernando Javier, Niskayuna, NY, 12309 (US); Abbaszadeh, Masoud, Niskayuna, NY, 12309 (US)
(74) Representative: Zimmermann & Partner Patentanwälte mbB

(57) **Abstract**

Systems and methods are provided for the control of an industrial asset, such as a power generating asset. Accordingly, an interceptor module receives a state-change instruction from a state module that directs a change from a first state condition to a second state condition. The first and second state conditions direct modes of operation of at least one sub module of the controller of the industrial asset. The interceptor module then correlates the state-change instruction to a state-change classification. Based on the state-change classification, the interceptor module identifies an indication of a mode-switching attack. In response to the identification of the mode-switching attack, at least one mitigation response is implemented.

## Description

### FIELD

The present disclosure relates in general to industrial assets, and more particularly to systems and methods for the control of an industrial asset in the presence of a cyber-attack.

### BACKGROUND

As disclosed herein, industrial assets may take a variety of forms. Accordingly, the industrial asset may include assets directed to the aviation industry, the nuclear industry, the petroleum industry, industrial infrastructure (e.g., pipelines and/or pumping stations), and/or the power generation industry. For example, the industrial asset may be a power generating asset and may include assets which rely on renewable and/or nonrenewable sources of energy.

Those power generating assets which rely on renewable sources of energy may generally be considered one of the cleanest, most environmentally friendly energy sources presently available. For example, wind turbines have gained increased attention in this regard. A modern wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate support frame located within the nacelle. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy and the electrical energy may be transmitted to a converter and/or a transformer housed within the tower and subsequently deployed to a utility grid. Modern wind power generation systems typically take the form of a wind farm having multiple wind turbine generators that are operable to supply power to a transmission system providing power to a power grid.

Certain industrial assets, such as renewable energy power generating assets (e.g., wind turbines), may be controlled via complex control systems. These control systems may be multi-modal switched systems that switch a controller mode of operation (e.g., state) based on environmental, operational, and/or safety parameters. Accordingly, the control systems may include a state machine (e.g., a finite state machine) at a supervisory layer. The state machine may assign a mode of operation to lower-level controllers, or submodules of the controller. For example, the controller of a wind turbine may be switched between below-rated and above-rated operational modes based on the environmental conditions affecting the wind turbine.

The assignment of the mode of operation (e.g. state) may be based on a switching logic among the operational states of the industrial asset. Typically, the logic to transition from one state to the next is programmed in the controller. As programmed, the logic may be incapable of implementing infeasible/impermissible transitions between the various states. For example, as programmed, the controller of an industrial asset (e.g., a wind turbine) may lack the programmed logic to transition from an idling operation to a normal operation without proceeding through a startup routine, as doing so may result in damage to the industrial asset. Typically, it is assumed during controller design that the controller will not have infeasible transitions. Thus, controllers of industrial assets generally do not include logic configured to validate a state transition. As such, the industrial asset may be targeted by cyber-attacks that seek to bypass the control logic and direct an infeasible/impermissible state transition.

The cyber-attacks may have a number of objectives which may be detrimental to the components of the industrial asset, the operations of the industrial asset, and/or the output of the industrial asset. For example, the cyber-attacks may have objectives directed to reducing a magnitude and/or quality of an output of the industrial asset, an unwanted shutdown, accelerated wear of components of the industrial asset, structural damage, and/or the destruction of the industrial asset. It should be appreciated that such objectives may be contrary to the desired employment of the industrial asset and may result in increased costs and/or lost profits. Accordingly, it may be desirable to detect and neutralize/mitigate the impacts of a cyber-attack.

Thus, the art is continuously seeking new and improved systems and methods that address the aforementioned issues. As such, the present disclosure is directed to systems and methods controlling an industrial asset in the presence of a cyber-attack.

### BRIEF DESCRIPTION

Aspects and advantages of the present disclosure will be set forth in part in the following description, or may be obvious from the description, or may be learned through practice of the present disclosure.

In one aspect, the present disclosure is directed to a method for controlling an industrial asset. The industrial asset includes a controller. The method includes receiving, via an interceptor module, a state-change instruction from a state module directing a change from a first state condition to a second state condition, wherein the first and second state conditions direct a mode of operation of at least one submodule of the controller. The method also includes correlating, via the interceptor module, the state-change instruction to a state-change classification. Further, the method includes identifying, via the interceptor module, an indication of a mode-switching attack based on the state-change classification. In response to the identification of the mode-switching attack, the method includes implementing at least one mitigation response.

In another aspect, the present disclosure is directed to system for controlling and industrial asset. The system includes a controller having a state module communicatively coupled to at least one submodule. The controller is configured to alter an operating state of the industrial asset. The system also includes an interceptor module communicatively coupled to the controller. The interceptor module has at least one processor configured to detect a cyber-attack on the controller. The detection of the cyber-attack includes receiving a state-change instruction from the state module directing a change from a first state condition to a second state condition, wherein the first and second state conditions direct a mode of operation of the at least one submodule of the controller, correlating the state-change instruction to a state-change classification, and identifying an indication of a mode-switching attack based on the state-change classification.

In another aspect, the present disclosure is directed to a system for controlling an industrial asset. The system may include a controller having a state module communicatively coupled to at least one submodule. The controller may be configured to alter an operating state of the industrial asset. The system may also include an interceptor module communicatively coupled to the controller. The interceptor module may include at least one processor configured to detect a cyber-attack on the controller. The detection of the cyber-attack may include receiving a state-change instruction from the state module directing a change from a first state condition to a second state condition. The state-change instruction may be correlated to a state-change classification. Additionally, an indication of a mode-switching attack may be identified based on the state-change classification.

These and other features, aspects and advantages of the present disclosure will become better understood with reference to the following description and appended claims. The accompanying drawings, which are incorporated in and constitute a part of this specification, illustrate embodiments of the present disclosure and, together with the description, serve to explain the principles of the present disclosure.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 illustrates a perspective view of one embodiment of an industrial asset configured as a wind turbine according to the present disclosure;
FIG. 2 illustrates a perspective, internal view of one embodiment of a nacelle of the wind turbine of FIG. 1 according to the present disclosure;
FIG. 3 illustrates a block diagram of one embodiment of a controller for use with the industrial asset according to the present disclosure;
FIG. 4 illustrates a schematic of a system for controlling the industrial asset in the presence of a cyber-attack according to the present disclosure;
FIG. 5 illustrates a table of potential state transitions and classifications thereof according to the present disclosure; and
FIG. 6 illustrates a flow chart of an embodiment of a method for controlling the industrial asset according to the present disclosure.

Repeat use of reference characters in the present specification and drawings is intended to represent the same or analogous features or elements of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made in the present disclosure without departing from the scope or spirit of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first", "second", and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten (10) percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present disclosure is directed to systems and methods for controlling an industrial asset in the presence of a cyber-attack. In other words, the systems and methods disclosed herein are directed to the response of an industrial asset to a cyber-attack. The industrial asset may, for example, be a power generating asset (e.g., a wind turbine, the solar plant, a hydroelectric plant, a fuel-fired power plant, etc.), an electrical grid, a pumping station, a pipeline, a refinery, a nuclear facility, an aviation asset, and/or any other similar asset. The objectives of the cyber-attack may, for example, include triggering an unplanned/undesirable shutdown of the industrial asset, reducing an output of the industrial asset, detecting any intrusion into the controller (whether remotely or locally), and/or modifying the output of the industrial asset so as to affect a connected the system (e.g., reducing the output of a wind farm to impact the connected electrical grid). Additionally, the objectives of the cyber-attack may, for example, include causing physical damage to the industrial asset, such as by adjusting the operating parameters of a component of the industrial system to increase the wearing of a component of the industrial asset and/or cause catastrophic damage to the industrial asset or a component thereof. It should, therefore, be appreciated that it may be desirable to detect and/or mitigate the effects of the cyber-attack.

In order to achieve the objective of the cyber-attack, the attack may seek to affect the operation of the industrial asset by impacting a supervisory layer state machine. In such an instance, the cyber-attack may seek to implement a mode-switching attack. The mode-switching attack may direct the controller to implement a state transition (e.g., a transition from a first mode of operation to a second mode of operation) that is always impermissible or may be impermissible under certain operating conditions. For example, a state transition from an idling state to a startup state for a wind turbine may always be permitted. However, a state transition from the idling state to a normal state (e.g., a nominal operating state of the industrial asset) may be impermissible, as such a transition without first transitioning to the startup state may damage the wind turbine. Further, a state transition from the startup state to the normal state may only be permissible only when certain other conditions (e.g., a wind speed being within a wind speed range) are satisfied and may be impermissible when the conditions are not satisfied (e.g. the wind speed being outside the wind speed range).

As disclosed herein, the cyber-attack may be detected and/or mitigated via the utilization of an interceptor module to facilitate the controlling of the industrial asset. For example, the interceptor module, which may be an individual component of the industrial asset or a component of the controller of the industrial asset, may receive a state-change instruction from a state module (e.g., a supervisory layer state machine). The state-change instruction may direct the change from a first date condition to a second state condition. The interceptor module may correlate the state-change instruction to a state-change classification. In other words, the interceptor module may determine whether the directed state change is a permissible state change or a state change that is permissible only under certain conditions. The interceptor module may then identify an indication of a mode-switching attack based on the state-change classification. For example, the presence of a mode-switching attack may be indicated when the directed state change is an impermissible state change always or under the current conditions. In response to the identification of the mode-switching attack, at least one mitigation response may be implemented. The mitigation response(s) may, for example, include altering an operating state of the industrial asset, generating an alert, and/or other similar responses.

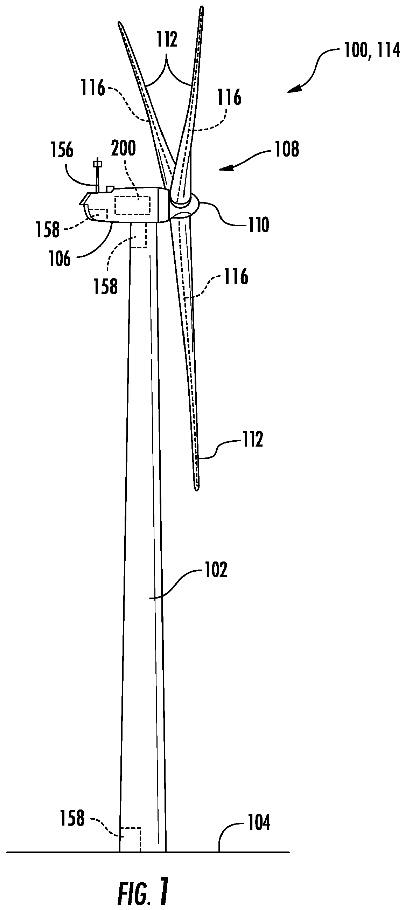

Referring now to the drawings, FIG. 1 illustrates a perspective view of one embodiment of an industrial asset 100 according to the present disclosure. As shown, the industrial asset 100 may be configured as a power generating asset, such as a wind turbine 114. In an additional embodiment, when configured as a power generating asset, the industrial asset 100 may, for example, be configured as a solar power generating asset, a hydroelectric plant, a fossil fuel generator, and/or a hybrid power generating asset. However, in further embodiments, the industrial asset 100 may be configured as an electrical grid, a pumping station, a pipeline, a refinery, a nuclear facility, an aviation asset, and/or any other similar asset.

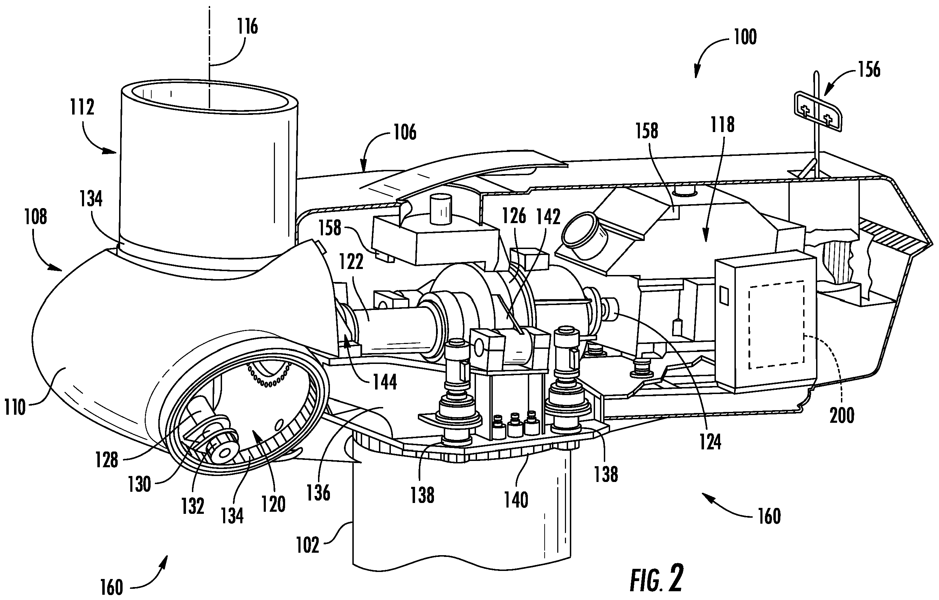

When configured as a wind turbine 114, the industrial asset 100 may generally include a tower 102 extending from a support surface 104, a nacelle 106, mounted on the tower 102, and a rotor 108 coupled to the nacelle 106. The rotor 108 may include a rotatable hub 110 and at least one rotor blade 112 coupled to, and extending outwardly from, the hub 110. For example, in the illustrated embodiment, the rotor 108 includes three rotor blades 112. However, in an additional embodiment, the rotor 108 may include more or less than three rotor blades 112. Each rotor blade 112 may be spaced about the hub 110 to facilitate rotating the rotor 108 to enable kinetic energy to be transferred from the wind into usable mechanical energy, and subsequently, electrical energy. For instance, the hub 110 may be rotatably coupled to an electric generator 118 (FIG. 2) positioned within the nacelle 106 to permit electrical energy to be produced.

The industrial asset 100 may also include a controller 200. When configured as a wind turbine 114, the controller 200 may be configured as a turbine controller centralized within the nacelle 106. However, in other embodiments, the controller 200 may be located within any other component of the wind turbine 114 or at a location outside the wind turbine. Further, the controller 200 may be communicatively coupled to any number of the components of the industrial asset 100 in order to control the components. As such, the controller 200 may include a computer or other suitable processing unit. Thus, in several embodiments, the controller 200 may include suitable computer-readable instructions that, when implemented, configure the controller 200 to perform various different functions, such as receiving, transmitting and/or executing wind turbine control/command signals. Additionally, the industrial asset 100 may include a plurality of actuators 160 which are configured to implement the various command signals and affect an operating state of the industrial asset 100. It should be appreciated that, as used herein, the "operating state" may refer to a physical configuration, orientation, and/or operating status of the industrial asset 100 or a component thereof.

Referring now to FIG. 2, a simplified, internal view of one embodiment of the nacelle 106 of the wind turbine 114 shown in FIG. 1 is illustrated. As shown, the generator 118 may be coupled to the rotor 108 for producing electrical power from the rotational energy generated by the rotor 108. For example, as shown in the illustrated embodiment, the rotor 108 may include a rotor shaft 122 coupled to the hub 110 for rotation therewith. The rotor shaft 122 may be rotatably supported by a main bearing 144. The rotor shaft 122 may, in turn, be rotatably coupled to a high-speed shaft 124 of the generator 118 through a gearbox 126 connected to a bedplate support frame 136. As is generally understood, the rotor shaft 122 may provide a low-speed, high-torque input to the gearbox 126 in response to rotation of the rotor blades 112 and the hub 110. The gearbox 126 may then be configured to convert the low-speed, high-torque input to a high-speed, low-torque output to drive the high-speed shaft 124 and, thus, the generator 118.

Each rotor blade 112 may also include a pitch control mechanism 120 configured to rotate each rotor blade 112 about its pitch axis 116. Each pitch control mechanism 120 may include a pitch drive motor 128, a pitch drive gearbox 130, and a pitch drive pinion 132. In such embodiments, the pitch drive motor 128 may be coupled to the pitch drive gearbox 130 so that the pitch drive motor 128 imparts mechanical force to the pitch drive gearbox 130. Similarly, the pitch drive gearbox 130 may be coupled to the pitch drive pinion 132 for rotation therewith. The pitch drive pinion 132 may, in turn, be in rotational engagement with a pitch bearing 134 coupled between the hub 110 and a corresponding rotor blade 112 such that rotation of the pitch drive pinion 132 causes rotation of the pitch bearing 134. Thus, in such embodiments, rotation of the pitch drive motor 128 drives the pitch drive gearbox 130 and the pitch drive pinion 132, thereby rotating the pitch bearing 134 and the rotor blade(s) 112 about the pitch axis 116.

It should be appreciated that pitching the rotor blade(s) 112 about the pitch axis 116 may alter an angle of attack between the rotor blade(s) 112 and an apparent wind. Accordingly, the rotor blade(s)l 12 may pitch to feather when the rotor blade(s) 112 rotates about the pitch axis 116 towards alignment with the apparent wind and to power when the rotor blade(s) rotates towards an orientation generally perpendicular to the apparent wind. It should be further appreciated that pitching to feather generally depowers the rotor blade(s) 112 as a result of a reduction in the resultant lift.

Similarly, the wind turbine 114 may include one or more yaw drive mechanisms 138 communicatively coupled to the controller 200, with each yaw drive mechanism(s) 138 being configured to change the angle of the nacelle 106 relative to the wind (e.g., by engaging a yaw bearing 140 of the wind turbine 114). It should be appreciated that the controller 200 may direct the yawing of the nacelle 106 and/or the pitching of the rotor blades 112 so as to aerodynamically orient the wind turbine 114 relative to a wind acting on the wind turbine 114, thereby facilitating power production.

In an embodiment, the industrial asset 100 may include an environmental sensor 156 configured for gathering data indicative of one or more environmental conditions. The environmental sensor 156 may be operably coupled to the controller 200. Thus, in an embodiment, the environmental sensor(s) 156 may, for example, be a wind vane, an anemometer, a lidar sensor, thermometer, barometer, or any other suitable sensor. The data gathered by the environmental sensor(s) 156 may include measures of wind speed, wind direction, wind shear, wind gust, wind veer, atmospheric pressure, and/or ambient temperature. In at least one embodiment, the environmental sensor(s) 156 may be mounted to the industrial asset 100 (e.g., to the nacelle 106 at a location downwind of the rotor 108). For example, the environmental sensor(s) 156 may, in alternative embodiments, be coupled to, or integrated with, the rotor 108 and/or positioned within the nacelle 106.

In an additional embodiment, the environmental sensor(s) 156 may be positioned separate from the industrial asset 100. For example, the environmental sensor(s) 156 may be a meteorological mast displaced some distance from the industrial asset 100. Additionally, the environmental sensor(s) 156 may be coupled to and additional asset, or subsystem of the industrial asset 100, such as a second wind turbine of a wind farm. It should also be appreciated that the environmental sensor(s) 156 may include a network of sensors and may be positioned away from the industrial asset 100.

In addition, the industrial asset 100 may include at least one operational sensor 158. The operational sensor(s) 158 may be configured to detect a performance of the industrial asset 100, e.g., in response to the environmental condition. For example, the operational sensor(s) 158 may be a rotational speed sensor, a position sensor, an acceleration sensor, and/or an output sensor operably coupled to the controller 200. The operational sensor(s) 158 may be directed at, or integral with, any suitable component of the industrial asset 100. For example, the operational sensor(s) 158 may be directed at the rotor shaft 122 of the wind turbine 114 and/or the generator 118. The operational sensor(s) 158 may gather data indicative of the rotational speed and/or rotational position of the rotor shaft 122, or any other shaft of the industrial asset 100, and thus the rotor 108, or a pump, in the form of a rotor speed, a rotor azimuth, and/or any other suitable measurement. The operational sensor(s) 158 may, in an embodiment, be an analog tachometer, a D.C. tachometer, an A.C. tachometer, a digital tachometer, a contact tachometer a non-contact tachometer, or a time and frequency tachometer. In an embodiment, the operational sensor(s) 158 may, for example, be an encoder, such as an optical encoder. Additionally, the operational sensor(s) 158 may be an ammeter, a voltmeter, an ohmmeter, and/or any other suitable sensor for monitoring an electrical condition of the industrial asset 100. Further, in an embodiment, the operational sensor(s) 158 may be a strain gauge, a proximity sensor, a LIDAR, and/or any other suitable sensor configured to detect a displacement of the industrial asset 100 or a component thereof.

It should also be appreciated that, as used herein, the term "monitor" and variations thereof indicates that the various sensors of the industrial asset 100 may be configured to provide a direct measurement of the parameters being monitored or an indirect measurement of such parameters. Thus, the sensors described herein may, for example, be used to generate signals relating to the parameter being monitored, which can then be utilized by the controller 200 to determine a condition or response of the industrial asset 100 and/or a component thereof.

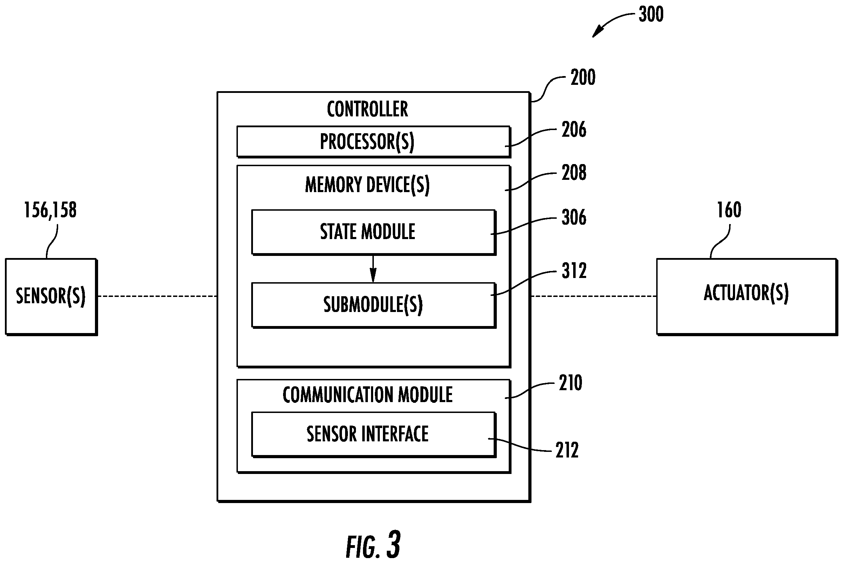

Referring now to FIGS. 3-5 multiple embodiments of aspects of a system 300 for controlling the industrial asset 100 according to the present disclosure are presented. As shown particularly in FIG. 3, a schematic diagram of one embodiment of suitable components that may be included within the system 300 is illustrated. For example, as shown, the system 300 may include a controller 200. The controller 200 may be employed to control the industrial asset 100. As such, the controller 200 may be employed off-line and/or in real time. Additionally, the controller 200 may be a single component located with the industrial assets. In an additional embodiment, the controller 200 may encompass more than one component located with industrial asset. In a further embodiment, the controller 200 may include additional components located at a distance from the industrial asset 100.

The controller 200 may be communicatively coupled to the environmental sensor(s) 156 and/or the operational sensor(s) 158. Further, as shown, the controller 200 may include one or more processor(s) 206 and associated memory device(s) 208 configured to perform a variety of computer-implemented functions (e.g., performing the methods, steps, calculations and the like and storing relevant data as disclosed herein). Additionally, the controller 200, may also include a communications module 210 to facilitate communications between the controller 200, and the various components of the industrial asset 100. Further, the communications module 210 may include a sensor interface 212 (e.g., one or more analog-to-digital converters) to permit signals transmitted from the sensor(s) 156, 158 to be converted into signals that can be understood and processed by the processors 206. It should be appreciated that the sensor(s) 156, 158 may be communicatively coupled to the communications module 210 using any suitable means. For example, the sensor(s) 156, 158 may be coupled to the sensor interface 212 via a wired connection. However, in other embodiments, the sensor(s) 156, 158 may be coupled to the sensor interface 212 via a wireless connection, such as by using any suitable wireless communications protocol known in the art. Additionally, the communications module 210 may also be operably coupled to at least one actuator 160 configured to implement a control action as directed by a command signal (e.g., a control vector).

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 208 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 208 may generally be configured to store suitable computer-readable instructions that, when implemented by the processor(s) 206, configure the controller 200 to perform various functions including, but not limited to, operating the industrial asset 100, generating and training a cyber-attack model, detecting a cyber-attack, and implementing a mitigation response based on a predicted operational impact of the cyber-attack as described herein, as well as various other suitable computer-implemented functions.

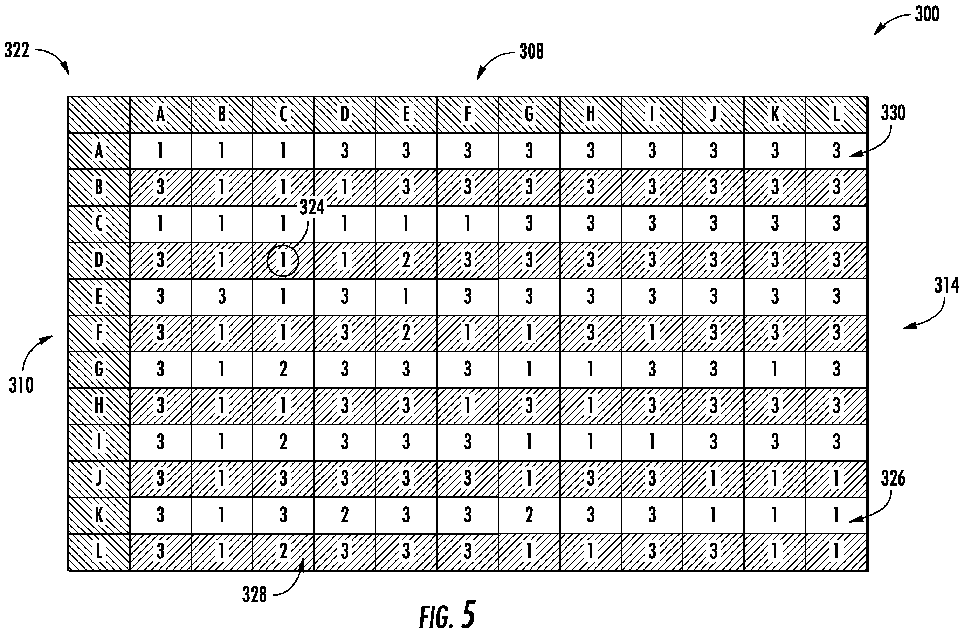

FIGS. 3-5 depict various aspects of a system 300 for controlling the industrial asset 100 in the presence of a cyber-attack. Accordingly, in an embodiment, an interceptor module 302 may receive a state-change instruction 304. The state-change instruction 304 may be generated via a state module 306. The state-change instruction 304 may direct a change from a first state condition 308 to a second state condition 310. In an embodiment, the first and second state conditions 308, 310 may direct a mode of operation of the at least one submodule 312 (e.g., a finite state machine) of the controller 200. The interceptor module 302 may, as depicted in FIG. 5, correlate the state-change instruction 304 to a state-change classification 314. The interceptor module 302 may then identify an indication of a mode-switching attack 316 based on the state-change classification 314. In response to the identification of the mode-switching attack 316, at least one mitigation response 318 may be implemented. Accordingly, an operating state 320 of the industrial asset 100 may be altered based on the mitigation response(s) 318. It should be appreciated that the mitigation response(s) 318 may include the generation of an attack alert, filtering action, a derating of the industrial asset 100, a shutdown of the industrial asset 100, and/or an establishment of a safe mode of operation

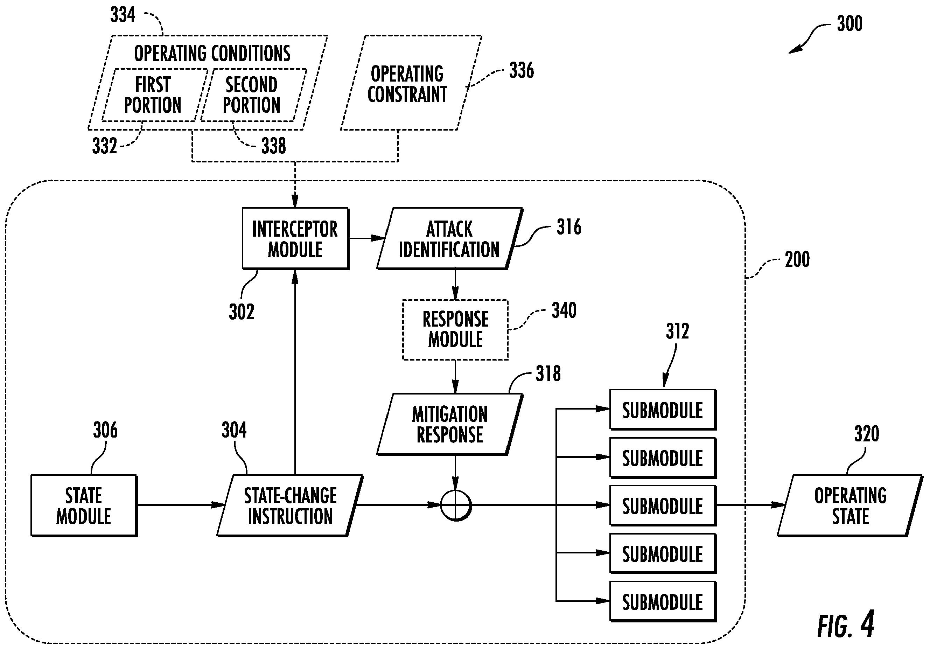

In an embodiment, the interceptor module 302 may be a component of the industrial asset 100 that is external to the controller 200. In such an embodiment, the interceptor module 302 may be an upgrade module that may be added to an existing industrial asset 100 and communicatively coupled to the controller 200. However, as depicted in FIG. 4, in an embodiment, the interceptor module 302 may be a component of the controller 200. In such an embodiment, the state-change instruction 304 may be received from the state module 306 in parallel with the submodule(s) 312 of the controller 200. In an embodiment, the interceptor module 302 may be configured to receive state-change instructions 304 at least once every 50 milliseconds.

The state module 306 may, in an embodiment, be configured to direct the operational mode of the controller 200, which may be a multi-modal switch system. For example, the state module 306 may, via a state-change instruction 304, configure the submodule(s) 312 to operate the wind turbine 114 in a below-rated mode when the wind affecting the wind turbine 114 is below a wind threshold. Similarly, the state module may, via a state-change instruction 304, configure the submodule(s) 312 to operate the wind turbine in an above-rated mode when the wind affecting the wind turbine is above the wind threshold. Accordingly, in an embodiment, the state module 306 may be a supervisory control layer of the controller 200. However, in an embodiment, the state module 306 may be a component external to the controller 200. For example, in an embodiment, the state module 306 may be a component of a supervisory controller, such as a farm-level controller of a wind farm.

The controller 200 may, in an embodiment, be programmed with a plurality of potential state transitions 322. This plurality of potential state transitions 322 is depicted in tabular form in FIG. 5 and may reflect all possible transitions between pairs of modes of operation of the controller 200. For example, in an embodiment, the controller 200 may have 20 or fewer modes of operation (e.g., 12 possible modes of operation). In such an embodiment, the plurality of potential state transitions 322 may include 400 or fewer potential state transitions 322 (e.g., 144 potential state transitions 322). Accordingly, each potential state transition of the plurality of potential state transitions 322 may correspond to a transition from the first state condition 308 to the second state condition 310. By way of nonlimiting illustration, the circle 324 may indicate a potential state transition from State C to State D.

As is further depicted in FIG. 5, each potential state transition of the plurality of potential state transitions 322 may be classified. The classifications of each potential state transition may be one of a first classification 326, a second classification 328, or a third classification 330. For example, the interceptor module 302 may determine an assigned state-change classification 314 for the instructed change from the first state condition 308 to the second state condition 310. In such an embodiment, the second state condition 310 may be an instructed mode of operation of the controller 200 and the first state condition 308 may be an immediately preceding mode of operation of the controller 200. It should be appreciated that the classifying of each potential state transition of the plurality of potential state transitions 322 may facilitate the utilization of a sparsity-based logical rule set to detect/identify the mode-switching attack 316.

The first classification 326 (indicated by the numeral "1") may correspond to a state transition that is always permissible. For example, as indicated in FIG. 5, a transition from State L to State K may be an always permitted state transition. In other words, state transitions classified as "always permissible" may be nominal state transitions. Therefore, a corresponding state-change instruction 304 may not be indicative of a cyber-attack, and the interceptor module 302 may refrain from taking any action.

The third classification 330 (indicated by the numeral "3") may correspond to a prohibited state transition. The prohibited state transition may be at least one of the plurality of potential state transitions 322 that always violates an operating constraint of the industrial asset 100. As such, the prohibited state transition may be an indication of the mode-switching attack 316. It should be appreciated that in so far as the prohibited state transition may violate the programmed logic of the controller, such a state-change instruction 304 may only manifest in the presence of a cyber-attack in general and the mode-switching attack 316 in particular.

For example, as indicated in FIG. 5, a transition from State L to State A may be a prohibited transition that always violates an operating constraint of the industrial asset 100. As such, a state-change instruction 304 directing a State L to State A transition may be classified by the interceptor module 302 as an indication of the mode-switching attack 316. It should be appreciated that correlating the received state-change instruction 304 via the interceptor module 302 to the prohibited transition may involve a very low computational overhead and may, thus, be accomplished essentially instantaneously following receipt of the state-change instruction 304 (e.g., in less than 10 milliseconds). Further, insofar as the prohibited state transitions are never permitted, an attack detection/identification based on the receipt of the state-change instruction 304 directing such a transition may be accomplished with a high confidence level.

The second classification 328 (indicated by the numeral "2") may correspond to a restricted state transition. The restricted state transition may be at least one of the plurality of potential state transitions 322 that is permitted/permissible under a first portion 332 of a plurality of operating conditions 334 but violates an operating constraint 336 of the industrial asset 100 under a second portion 338 of the plurality of operating conditions 334. For example, as indicated in FIG. 5, a transition from State C to State L may be permitted only when the first portion 332 of the plurality of operating conditions 334 are present. It should be appreciated that data indicative of the plurality of operating conditions 334 may be received from the environmental sensor(s) 156 and/or the operational sensor(s) 158.

In other words, whether the receipt of a state-change instruction 304 having the second classification 328 is an indication of a mode-switching attack 316 may be dependent on the operating conditions of the industrial asset 100 at the time the instruction is received by the interceptor module 302. To that end, the receipt of the state-change instruction 304 when the first portion 332 of the plurality of operating conditions 334 are present/satisfied, may be indicative of a nominal operation rather than a cyber-attack. However, the receipt of the same state-change instruction 304 when the second portion 332 of the plurality of operating conditions 334 are present/satisfied may be an indication of the mode-switching attack 316.

By way of illustration, the interceptor module 302 may, in an embodiment, receive the second portion 338 of the plurality of operating conditions 334. The interceptor module 302 may also determine that at least one operating condition threshold corresponding to the operating constraint 336. Then, the interceptor module 302 may determine at least one operating condition of the second portion 338 that is in violation of the operating condition threshold. Accordingly, the restricted state transition may be an indication of the mode-switching attack 316 when the at least one operating condition of the second portion 338 is in violation of the operating condition threshold.

For example, as indicated in FIG. 5, a transition from State G to State K may, in an embodiment, be a restricted state transition. In the illustrative embodiment, the G-to-K transition may reflect a transition from a run-up state to a load operation state. For such a transition to be permissible, a certain minimal rotational speed of a shaft of the industrial asset 100 may be required prior to the transition of the industrial asset to loaded operations. In such an embodiment, the operating conditions 334 may correspond to the shaft rotation speed and the operating constraint 336 may correspond to the minimal rotational speed of the shaft. Therefore, the first portion 332 may correspond to shaft speeds above the minimal rotational speed, while the second portion 338 may correspond to shaft speeds below the minimal rotational shaft speed. As such, a state-change instruction 304 directing a G-to-K transition when the shaft speed is below the minimal rotational shaft speed may be classified by the interceptor module 302 as an indication of the mode-switching attack 316. It should be appreciated that correlating the received state-change instruction 304 via the interceptor module 302 to the restricted state transition may involve a very low computational overhead that may not be significantly increased by the additional consideration of the operating conditions, and may thus, be accomplished essentially instantaneously following receipt of the state-change instruction 304 (e.g., in less than 10 milliseconds). Further, insofar as the restricted state transitions are never permitted when the second portion 338 is in violation of the operating constraint 336, an attack detection/identification based on the receipt of the state-change instruction 304 directing such a transition in violation of the operating constraint 336 may be accomplished with a high confidence level.

As previously stated, in response to the identification of the mode-switching attack 316, the mitigation response(s) 318 may be implemented. In an embodiment, the mitigation response(s) 318 may include a filtering of the state-change instruction 304. In such an embodiment, the controller 200/submodule(s) 312 may be maintained in an immediately preceding mode of operation. In other words, the mitigation response(s) 318 maintaining the controller 200/submodule(s) 312 in a pre-attack mode and refraining from implementing the state-change instruction 304 resulting from the mode-switching attack. It should be appreciated that maintaining the controller 200/submodule(s) 312 in the pre-attack mode may preclude/mitigate an effect (e.g., damage of the industrial asset 100) of the cyber-attack.

In an embodiment, the mitigation response(s) 318 may include generating an attack alert, which may correspond to the identification of the mode-switching attack 316. The attack alert may be configured to notify an operator and/or a supervisory controller of the detected cyber-attack. It should be appreciated that the attack alert may be generated in conjunction with any other of the mitigation responses 318 disclosed herein.

As depicted in FIG. 4, in an embodiment, the controller 200 may include a response module 340. The response module 340 may be configured to receive the attack alert from the interceptor module 302 indicating the mode-switching attack 316. Upon receipt of the attack alert, the response module 340 may determine a projected objective/predicted operational impact of the mode-switching attack 316. The response module 340 may then select the mitigation response(s) 318 from a plurality of potential mitigation responses based, at least in part, on the projected objective/predicted operational impact of the mode-switching attack 316.

For example, the response module 340 may correlate the projected objective/predicted operational impact of the cyber-attack to the increased wearing (e.g., an accumulation of damage) of a component and/or other damage to the industrial asset 100. In such an embodiment, the mitigation response(s) may include altering an operating state 320 of the industrial asset, such as by altering an orientation of a component of the industrial asset 100, and/or derating the industrial asset 100 (to include initiating a controlled shutdown of the industrial asset 100). For example, in an embodiment, the derating the industrial asset 100 may mitigate the accumulation of damage to the industrial asset 100 or a component thereof.

Following the selection of the mitigation response(s) 318, the operating state 320 of the industrial asset 100 may be altered. The alteration of the operating state 320 may be based on the selected mitigation response(s) 318. It should be appreciated that the alteration of the operating state 320 may be accomplished to mitigate/counteract the predicted operational impact of the detected cyber-attack. As such, in an embodiment, the alteration of the operating state 320 may include reestablishing a pre-attack operating state for an affected component. However, in an additional embodiment, the alteration of the operating state 320 may include establishing a post-attack operating state which differs from a pre-attack operating state and is configured to mitigate the predicted operational impact of the detected cyber-attack.

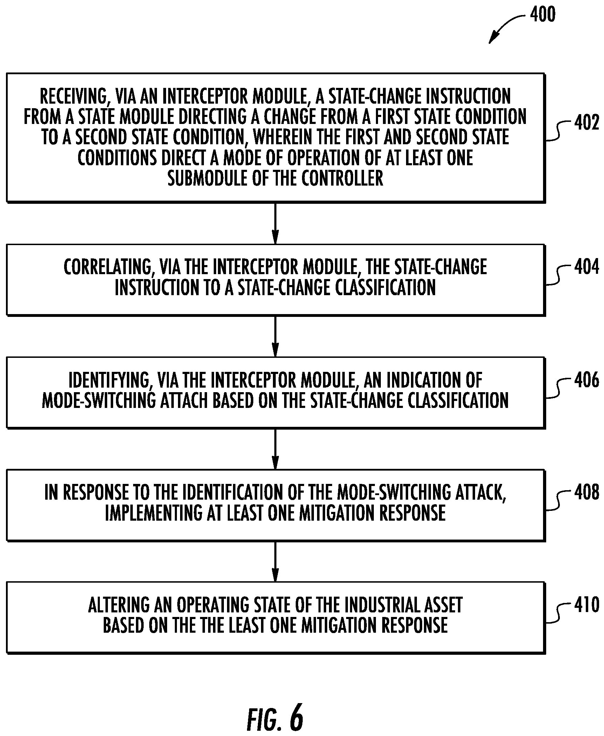

Referring now to FIG. 6 wherein a flow diagram of one embodiment of a method 400 for controlling an industrial asset 100 in the presence of a cyber-attack is illustrated. The method 400 may be implemented using, for instance, the control system 300 discussed above with reference to FIGS. 3-5. FIG. 6 depicts steps performed in a particular order for purposes of illustration and discussion. Those of ordinary skill in the art, using the disclosures provided herein, will understand that various steps of the method 400 or any of the other methods disclosed herein may be adapted, modified, rearranged, performed simultaneously or modified in various ways without deviating from the scope of the present disclosure.

As shown at (402), the method 400 may include receiving, via an interceptor module, a state-change instruction from a state module directing a change from a first state condition to a second state condition. The first and second state conditions may direct a mode of operation of at least one submodule of the controller. As shown at (404), the method 400 may include correlating, via the interceptor module, the state-change instruction to a state-change classification. As shown at (406), the method 400 may include identifying, via the interceptor module, an indication of a mode-switching attack based on the state-change classification. As shown at (408), the method 400 may include, implementing at least one mitigation response in response to the identification of the mode-switching attack. Additionally, as shown at (410), the method 400 may include altering an operating state of the industrial asset based on the at least one mitigation response.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

These and further aspects of the present disclosure are summarized in the subject matter of the following clauses:
Clause 1. A method for controlling an industrial asset, the industrial asset including a controller, the method comprising:
   receiving, via an interceptor module, a state-change instruction from a state module directing a change from a first state condition to a second state condition, wherein the first and second state conditions direct a mode of operation of at least one submodule of the controller;
   correlating, via the interceptor module, the state-change instruction to a state-change classification;
   identifying, via the interceptor module, an indication of a mode-switching attack based on the state-change classification; and
   in response to the identification of the mode-switching attack, implementing at least one mitigation response.
Clause 2. The method of clause 1, wherein correlating the state-change instruction to the state-change classification further comprises:
   classifying each potential state transition of a plurality of potential state transitions as first classification, a second classification, or a third classification, wherein the first classification corresponds to an always permitted state transition, wherein the second classification corresponds to a restricted state transition, wherein the third classification corresponds to a prohibited state transition, and wherein the plurality of potential state transitions corresponds to all possible transitions between pairs of modes of operation of the controller.
Clause 3. The method of clause 2, wherein correlating the state-change instruction to the state-change classification further comprises:
   determining, via the interceptor module, an assigned state-change classification for the change from the first state condition to the second state condition, wherein the second state condition comprises an instructed mode of operation of the controller, and wherein the first state condition comprises an immediately preceding mode of operation of the controller.
Clause 4. The method of clauses 2-3, wherein the prohibited state transition comprises at least one of the plurality of potential state transitions that always violates an operating constraint of the industrial asset and is an indication of the mode-switching attack.
Clause 5. The method of clauses 2-4, wherein the restricted state transition comprises at least one of the plurality of potential state transitions that is permitted under a first portion of a plurality of operating conditions and violates an operating constraint of the industrial asset under a second portion of the plurality of operating conditions.
Clause 6. The method of clause 5, wherein identifying the indication of the mode-switching attack further comprises:
   receiving, via the interceptor module, the second portion of the plurality of operating conditions;
   determining, via the interceptor module, at least one operating condition threshold corresponding to the operating constraint for the restricted state transition; and
   determining, via the interceptor module, at least one operating condition of the second portion that is in violation of the operating condition threshold, wherein the restricted state transition is an indication of the mode-switching attack when the at least one operating condition of the second portion is in violation of the operating condition threshold.
Clause 7. The method of clause 2-6, wherein the controller has 20 or fewer modes of operation, and wherein the plurality of potential state transitions comprises 400 or fewer potential state transitions.
Clause 8. The method of any of the preceding clauses, wherein the at least one submodule of the controller comprises a finite state machine.
Clause 9. The method of any of the preceding clauses, wherein state module comprises a supervisory control layer of the controller.
Clause 10. The method of clause 9, wherein the interceptor module is a component of the controller and wherein receiving the state-change instruction further comprises:
   receiving the state-change instruction from the state module in parallel with the at least one submodule of the controller.
Clause 11. The method of clause 10, wherein receiving the state-change instruction further comprises:
   receiving the state-change instruction from the state module at least once every 50 milliseconds.
Clause 12. The method of clause 10, wherein implementing the at least one mitigation response further comprises:
   filtering the state-change instruction so that the controller is maintained in an immediately preceding mode of operation; and
   generating an attack alert.
Clause 13. The method of clause 10, wherein implementing the at least one mitigation response further comprises:
   receiving, via a response module of the controller, an attack alert from the interceptor module indicating the mode-switching attack;
   determining, via the response module, a projected objective of the mode-switching attack; and
   selecting, via the response module, the at least one mitigation response from a plurality of potential mitigation responses based, at least in part, on the projected objective of the mode-switching attack.
Clause 14. The method of any of the preceding clauses, wherein the at least one mitigation response comprises at least one of an attack alert, a filtering action, a derating of the industrial asset, a shutdown of the industrial asset, and an establishment of a safe mode of operation.
Clause 15. The method of any of the preceding clauses, further comprising altering an operating state of the industrial asset based on the at least one mitigation response.
Clause 16. The method of any of the preceding clauses, wherein the industrial asset comprises a wind turbine.
Clause 17. A system for controlling and industrial asset, the system comprising:
   a controller comprising a state module communicatively coupled to at least one submodule, wherein the controller is configured to alter an operating state of the industrial asset; and
   an interceptor module communicatively coupled to the controller, the interceptor module comprising at least one processor configured to detect a cyber-attack on the controller, the detection of the cyber-attack comprising:
      receiving a state-change instruction from the state module directing a change from a first state condition to a second state condition, wherein the first and second state conditions direct a mode of operation of the at least one submodule of the controller,
      correlating the state-change instruction to a state-change classification, and
      identifying an indication of a mode-switching attack based on the state-change classification.
Clause 18. The system of clause 17, wherein correlating the state-change instruction to the state-change classification further comprises:
   classifying each potential state transition of a plurality of potential state transitions as first classification, a second classification, or a third classification, wherein the first classification corresponds to an always permitted state transition, wherein the second classification corresponds to a restricted state transition, wherein the third classification corresponds to a prohibited state transition, and wherein the plurality of potential state transitions corresponds to all possible transitions between pairs of modes of operation of the controller.
Clause 19. The system of clause 18, wherein correlating the state-change instruction to the state-change classification further comprises:
   determining, via the interceptor module, an assigned state-change classification for the change from the first state condition to the second state condition, wherein the second state condition comprises an instructed mode of operation of the controller, and wherein the first state condition comprises an immediately preceding mode of operation of the controller.
Clause 20. The system of clauses 18-19, wherein the prohibited state transition comprises at least one of the plurality of potential state transitions that always violates an operating constraint of the industrial asset and is an indication of the mode-switching attack, and wherein the restricted state transition comprises at least one of the plurality of potential state transitions that is permitted under a first portion of a plurality of operating conditions and violates an operating constraint of the industrial asset under a second portion of the plurality of operating conditions, and, wherein identifying the indication of the mode-switching attack further comprises:
   receiving, via the interceptor module, the second portion of the plurality of operating conditions;
   determining, via the interceptor module, at least one operating condition threshold corresponding to the operating constraint for the restricted state transition; and
   determining, via the interceptor module, at least one operating condition of the second portion that is in violation of the operating condition threshold, wherein the restricted state transition is an indication of the mode-switching attack when the at least one operating condition of the second portion is in violation of the operating condition threshold.

This written description uses examples to disclose the present disclosure, including the best mode, and also to enable any person skilled in the art to practice the present disclosure, including making and using any devices or systems and performing any incorporated methods. The patentable scope of the present disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for controlling an industrial asset, the industrial asset including a controller, the method comprising:
receiving, via an interceptor module, a state-change instruction from a state module directing a change from a first state condition to a second state condition, wherein the first and second state conditions direct a mode of operation of at least one submodule of the controller;
correlating, via the interceptor module, the state-change instruction to a state-change classification;
identifying, via the interceptor module, an indication of a mode-switching attack based on the state-change classification; and
in response to the identification of the mode-switching attack, implementing at least one mitigation response.

2. The method of claim 1, wherein correlating the state-change instruction to the state-change classification further comprises:
classifying each potential state transition of a plurality of potential state transitions as first classification, a second classification, or a third classification, wherein the first classification corresponds to an always permitted state transition, wherein the second classification corresponds to a restricted state transition, wherein the third classification corresponds to a prohibited state transition, and wherein the plurality of potential state transitions corresponds to all possible transitions between pairs of modes of operation of the controller.

3. The method of any of the preceding claims, wherein correlating the state-change instruction to the state-change classification further comprises:
determining, via the interceptor module, an assigned state-change classification for the change from the first state condition to the second state condition, wherein the second state condition comprises an instructed mode of operation of the controller, and wherein the first state condition comprises an immediately preceding mode of operation of the controller.

4. The method of any of the preceding claims, wherein the prohibited state transition comprises at least one of the plurality of potential state transitions that always violates an operating constraint of the industrial asset and is an indication of the mode-switching attack.

5. The method of any of the preceding claims, wherein the restricted state transition comprises at least one of the plurality of potential state transitions that is permitted under a first portion of a plurality of operating conditions and violates an operating constraint of the industrial asset under a second portion of the plurality of operating conditions.

6. The method of any of the preceding claims, wherein identifying the indication of the mode-switching attack further comprises:
receiving, via the interceptor module, the second portion of the plurality of operating conditions;
determining, via the interceptor module, at least one operating condition threshold corresponding to the operating constraint for the restricted state transition; and
determining, via the interceptor module, at least one operating condition of the second portion that is in violation of the operating condition threshold, wherein the restricted state transition is an indication of the mode-switching attack when the at least one operating condition of the second portion is in violation of the operating condition threshold.

7. The method of any of the preceding claims, wherein the controller has 20 or fewer modes of operation, and wherein the plurality of potential state transitions comprises 400 or fewer potential state transitions.

8. The method of any of the preceding claims, wherein the at least one submodule of the controller comprises a finite state machine.

9. The method of any of the preceding claims, wherein state module comprises a supervisory control layer of the controller.

10. The method of any of the preceding claims, wherein the interceptor module is a component of the controller and wherein receiving the state-change instruction further comprises:
receiving the state-change instruction from the state module in parallel with the at least one submodule of the controller.

11. The method of any of the preceding claims, wherein receiving the state-change instruction further comprises:
receiving the state-change instruction from the state module at least once every 50 milliseconds.

12. The method of any of the preceding claims, wherein implementing the at least one mitigation response further comprises:
filtering the state-change instruction so that the controller is maintained in an immediately preceding mode of operation; and
generating an attack alert.

13. The method of any of the preceding claims, wherein implementing the at least one mitigation response further comprises:
receiving, via a response module of the controller, an attack alert from the interceptor module indicating the mode-switching attack;
determining, via the response module, a projected objective of the mode-switching attack; and
selecting, via the response module, the at least one mitigation response from a plurality of potential mitigation responses based, at least in part, on the projected objective of the mode-switching attack.

14. The method of any of the preceding claims, wherein the at least one mitigation response comprises at least one of an attack alert, a filtering action, a derating of the industrial asset, a shutdown of the industrial asset, and an establishment of a safe mode of operation.

15. The method of any of the preceding claims, further comprising altering an operating state of the industrial asset based on the at least one mitigation response.
